# EUROPEAN PATENT APPLICATION

(11) **EP 1 781 029 A2**
(43) Date of publication of application: **02.05.2007**
(21) Application number: 06123260.9
(22) Date of filing: 31.10.2006
(51) Int. Cl.: H04N 5/76

(54) **Video recording apparatus and method thereof**

(30) Priority: 31.10.2005 JP 2005315578
(71) Applicant: Pioneer Corporation, Meguro-ku, Tokyo (JP)
(72) Inventor: Yamada, Akihito c/o Pioneer Corporation, Ota-ku Tokyo Yamanashi (JP); Murayama, Masayoshi c/o Pioneer Corporation, Nakakoma-gun Yamanashi (JP)
(74) Representative: Skuhra, Udo

(57) **Abstract**

A video recording apparatus, by comparing the preselected video recording duration with a preset reference video recording duration, assumes a video recording end time as an end time of a broadcast program next to the broadcast program for which the start of video recording is instructed in case the preselected video recording duration is shorter than the preset reference video recording duration, and assumes the video recording end time as the end time of the broadcast program for which the start of video recording is instructed in case that the preselected video recording duration is longer than the preset reference video recording duration.

## Description

### TECHNICAL FIELD

The present invention relates to a video recording apparatus recording a broadcast program.

### DESCRIPTION OF THE RELATED ART

Generally speaking, in case video recording of a television broadcast program is reserved, a video recording start time and end time are respectively set on video recording apparatus. Recently, a program reservation method is in widespread use that uses EPG (Electronic Program Guide) information transmitted in multiplexed form on television broadcast radio waves. As one of the methods that use the EPG information, a so-called one-touch video recording method is known where video recording is started based on a video recording instruction manually made by the user (viewer, operator) and video recording is automatically terminated at an end time from EPG information (for example, refer to Japanese Patent No. 3530454 (first half of the paragraph [0009])).

According to this method, the EPG information of a broadcast program of which the user reserved video recording is referenced. Thus the end time of the program being received at the time of the video recording instruction is detected to start video recording. According to this method, in case a video recording instruction is made before the broadcast program to be video recorded starts causes the video recording apparatus to operate and ends video recording at the end time of a program preceding the target broadcast program based on the acquired EPG information. This prevents video recording of a desired broadcast program. In case the user has the wrong impression that a broadcast program to be video recorded has already started while another program such as a live baseball broadcast is extended and has made a video recording instruction, video recording covers only the extended live baseball broadcast program.

### SUMMARY

The invention has been accomplished in view of the above problems. According an aspect of the invention, there is provided a video recording apparatus that automatically terminates video recording of a broadcast program at the end of the program based on a direct instruction to start video recording.

According to another aspect of the invention, there is provided a video recording apparatus comprising: a tuner unit receiving a program broadcast; a signal separation unit separating, respectively, video, an audio signal, an EPG program information signal and a time signal from the program broadcast signal of a channel received by the tuner unit; a video recording unit recording a video/audio signal separated by the signal separation unit; an input unit with which a user manually instructs a start of recording on the video recording unit; a program end time detection unit detecting from the EPG program information signal an end time of the broadcast program for which the start of recording is instructed with the input unit; a preselected video recording duration calculation unit calculating a preselected video recording duration from a recording start time at which the start of the recording is instructed to the end time of the broadcast program; a video recording end time setting unit, by comparing the preselected video recording duration with a preset reference video recording duration, assuming a video recording end time as an end time of a broadcast program next to the broadcast program for which the start of video recording is instructed in case that the preselected video recording duration is shorter than the preset reference video recording duration and assuming the video recording end time as the end time of the broadcast program for which the start of video recording is instructed in case that the preselected video recording duration is longer than the preset reference video recording duration; and a video recording control unit controlling to stop the video recording unit at the time set by the video recording end time setting unit.

According to another aspect of the invention, a video recording apparatus comprising: a tuner unit receiving a program broadcast; a signal separation unit separating, respectively, video, an audio signal, an EPG program information signal and a time signal from the program broadcast signal of a channel received by the tuner unit; a video recording unit recording a video/audio signal separated by the signal separation unit; an input unit with which a user manually instructs a start of recording on the video recording unit; a program end time detection unit detecting from the EPG program information signal an end time of the broadcast program for which the start of recording is instructed with the input unit; a preselected video recording duration calculation unit calculating a preselected video recording duration from a recording start time at which the start of the recording is instructed to the end time of the broadcast program; a video recording end time selection unit, by comparing the preselected video recording duration with a preset reference video recording duration, making the user select whether to assume the video recording end time as the end time of the broadcast program for which the start of video recording is instructed in case that the preselected video recording duration is shorter than the preset reference video recording duration, or assuming the video recording end time as an end time of a broadcast program next to the broadcast program for which the start of video recording is instructed; and a video recording control unit controlling to stop the video recording unit at the time set by the video recording end time setting unit.

According to another aspect of the invention, there is provided a video recording method comprising: receiving a signal of program broadcast; separating video, an audio signal, an EPG program information signal and a time signal from the signal of program broadcast; manually instructing, by a user, a start of recording of the program broadcast; detecting from the EPG program information signal an end time of the broadcast program for which the start of recording is instructed; calculating a preselected video recording duration from a recording start time at which the start of the recording is instructed to the end time of the broadcast program; comparing the preselected video recording duration with a preset reference video recording duration; assuming, by a result of the comparison, a video recording end time as an end time of a broadcast program next to the broadcast program for which the start of recording is instructed in case that the preselected video recording duration is shorter than the preset reference video recording duration and assuming, by the result of the comprison, the video recording end time as the end time of the broadcast program for which the start of recording is instructed in case that the preselected video recording duration is longer than the preset reference video recording duration; and controlling to stop a recording of the broadcast program at the recording end time.

### BRIEF DESCRIPTION OF THE DRAWINGS

Fig. 1 is a block diagram showing the configuration of a first embodiment of the invention.
Figs. 2A, 2B show a time chart showing the concept of the first embodiment and a flowchart of its processing.
Fig. 3A, 3B show a time chart showing the concept of the second embodiment of the invention and a flowchart of its processing.
Fig. 4A, 4B show a time chart showing the concept of the third embodiment of the invention and a flowchart of its processing.
Fig. 5 shows general program information (EPG information).
Figs. 6A, 6B show an example of GUI setting screen and its choices in the third embodiment.
Fig. 7 shows a flowchart of processing to reference the genres according to a fourth embodiment of the invention to set the corresponding ratio.
Fig. 8 shows a genre-based determination ratio list according to the fourth embodiment.

### DESCRIPTION OF THE EMBODIMENTS

Embodiments of the invention will be detailed with reference to drawings.

### (Embodiment 1)

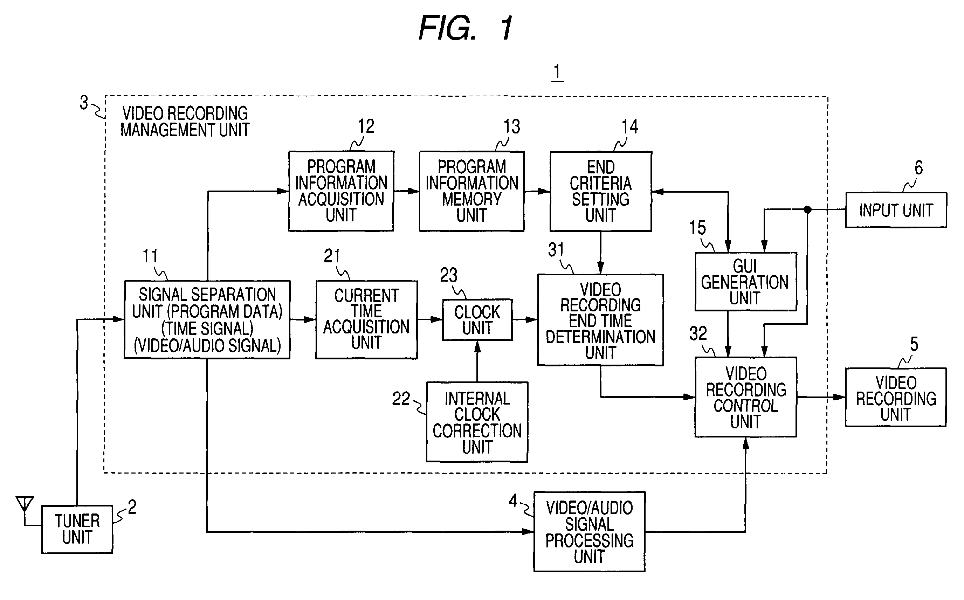

Fig. 1 is a block diagram showing the configuration of an embodiment of the invention.

Video recording apparatus 1 comprises a tuner unit 2 for receiving a program broadcast signal, a video recording information management unit 3 for managing information on video recording, a video/audio signal processing unit 4 for acquiring the video and audio signals of a video recording target, a video recording unit 5 for recording the acquired video and audio signals, and an input unit 6 the use operates to input data.
The video recording information management unit 3 includes a signal separation unit 11 for inputting a receive signal output from the tuner unit 2 and separating program data, a time signal, a video signal and an audio signal, program information acquisition unit 12 for processing the separated program data, a program information memory unit 13, an end criteria setting unit 14, a GUI generation unit 15 for generating the screen data of this setting, a current time acquisition unit 21 for processing the separated time signal, a clock unit 23, and an internal clock correction unit 22. The a video recording information management unit 3 includes a video recording end time determination unit 31 for determining that the end time of a broadcast program to be video recorded is reached based on the criteria of the end criteria setting unit 14 using the output of the clock unit 23, and a video recording control unit 32 for controlling the start and end of video recording of the output from the GUI generation unit 15 and the video/audio signal processing unit 4. The video/audio signal output controlled by the video recording control unit 32 is input to the video recording unit 5 for video recording.

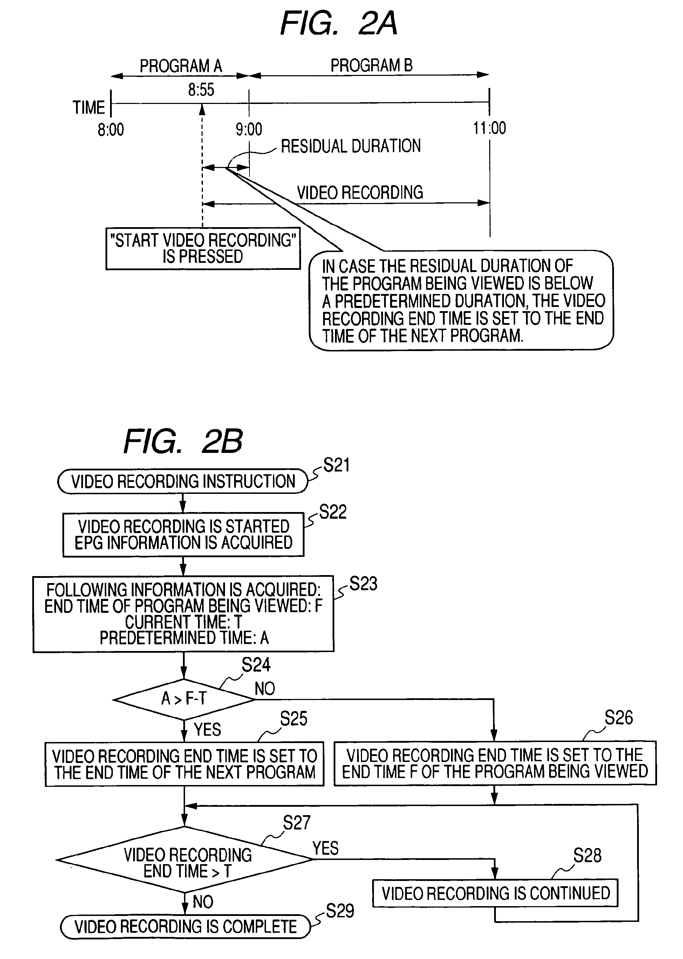

Next, Operation of the first embodiment that determines a video recording end time based on a predetermined time ratio will be explained by using the block diagram of Fig. 1 and flowchart of Fig. 2B.

Fig. 2A shows a time chart of video recording by the video recording apparatus 1. In case a user wishes to video record the entirety of Program B in this embodiment, generally speaking, the user manually operates for example a video recording start button to instruct the start of video recording before the start of Program B. At this point in time, Program A before Program B is on the air. For example, Program A is on the air from the time 8: 00 as shown in Fig. 2A. At the time 8:55 when Program A-is being received, the user instructs to the video recording apparatus 1 the "start of video recording" by way of the video recording start button on the input unit 6 (step S21).

In response to the start instruction, the signal separation unit 11 of the video recording apparatus 1 receiving the broadcast program A on the tuner unit 2 separates the video/audio signal from the receive signal. The video/audio signal demodulated by the video/audio signal processing unit 4 is input to the video recording unit 5 via the video recording control unit 32 and video recording is started (step S22).

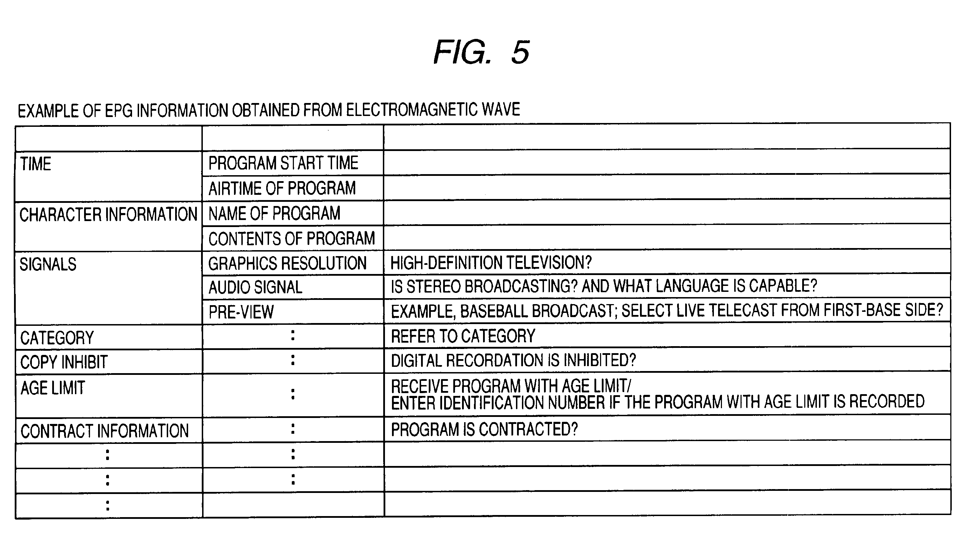

The signal separation unit 11 separates an EPG information signal from the receive signal and inputs the EPG information signal to the program information acquisition unit 12. As partially shown in Fig. 5, the EPG information signal includes program information such as a program start time, a program length (required broadcast duration), a program name, a program content, a genre name (classified item name of main genre/ sub-genre). The program information acquisition unit 12 extracts the data of a predetermined item and the program information memory unit 13 stores the data. In this embodiment, especially the program start time S and program length D of the stored data are referenced to calculate a program end time F (F=S+D), which is also stored.

From the time signal separated by the signal separation unit 11, the current time is detected by the current time acquisition unit 21 and set to the clock unit 23, which outputs the current time T. In case a time signal is not acquired from a program broadcast signal of for example an analog broadcast, the internal click correction unit 22 corrects the precision (gain and loss) of time counting by the clock unit 23 of an internal clock built in the video recording apparatus 1.

When video recording is started in step S22, video recording on the video recording unit 5 is started as controlled by the video recording control unit 32. At the same time, a predetermined specific video recording determination duration a such as "15 minutes" as a default is input from the GUI generation/input unit 15 to the end criteria setting unit 14.

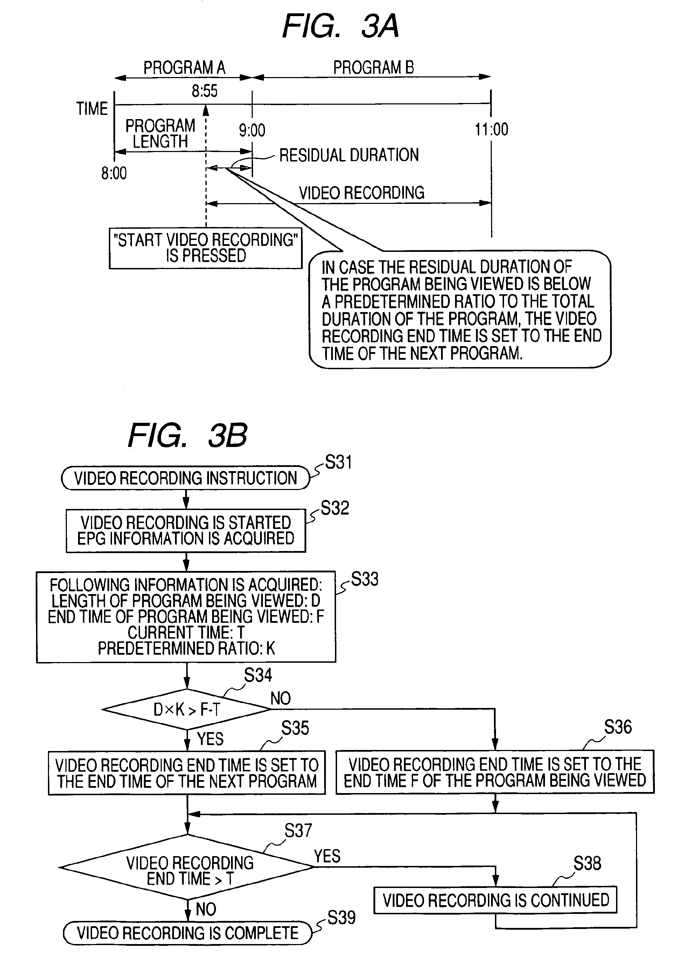

The video recording end time determination unit 31 to which the end criteria setting unit 14 and the clock unit 23 are connected determines, in step S23, a calculated program end time: F, a current time: T and a predetermined video recording schedule determination duration a of a broadcast program on the air at that point in time, that is, Program A shown in Fig. 3A. Then the video recording end time determination unit 31 determines, in step S24, whether a determination expression: a>F-T (preselected video recording duration) is True.

In case the result of determination in step S24 is "True (Y)", that is, the duration of the program to be video recorded (preselected video recording duration) is shorter than a predetermined video recording schedule determination duration a (preselected video recording duration shorter than the predetermined video recording schedule determination time), the video recording duration is within the preset video recording schedule determination time a. The desired video recording is assumed to cover the next program to be broadcast, and the video recording end time is set to the end time of the next program B (step S25). In case the result of determination in step S24 is "False (N)", that is, video recording is made (scheduled) for a preselected video recording duration longer than a predetermined video recording schedule determination time a, the broadcast program on the air at the point in time is determined as a desired video recording target and the end time F of the program (program A) is set as a video recording end time (step S26).

After this determination, the video recording end time determination unit 31 determines the current time T output by the clock unit 23 every instant and outputs to the video recording control unit 32 a signal to instruct continuation of video recording until the video recording end time set in step S35 or S36 is reached (step S37). When the video recording end time is reached, the video recording end time determination unit 31 outputs a signal to instruct termination of video recording to the video recording control unit 32.

The video recording control unit 32 that receives the output signal makes control to start video recording of a video/audio signal by way of the video recording unit 5 in response to a video recording start instruction, continue the video recording by way of the continuation-instructing signal (step S28), and terminate the video recording by the video recording unit 5 by way of the termination-instructing signal (step S29).

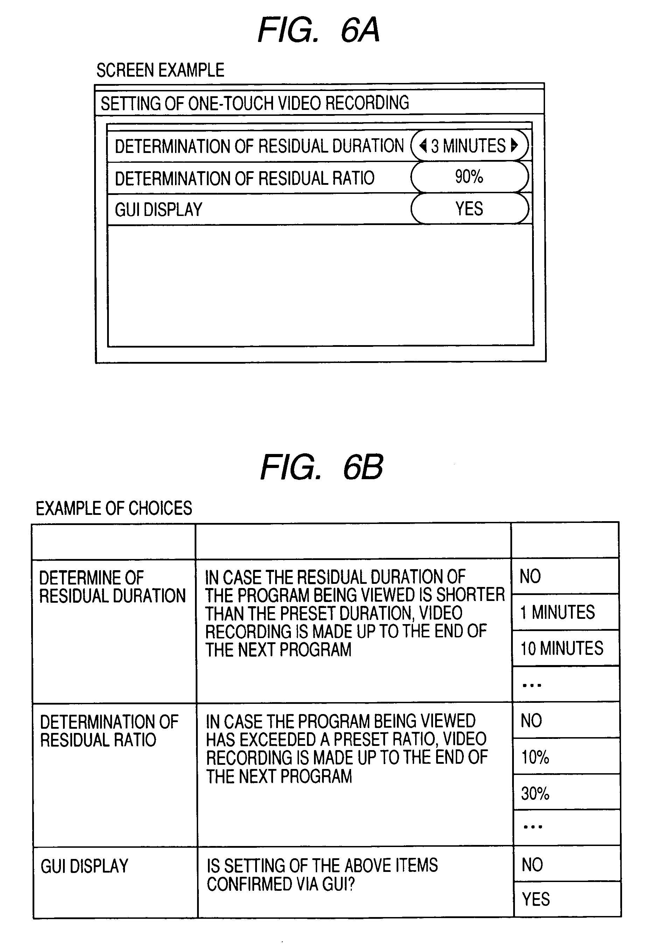

The predetermined video recording schedule determination duration a as a criterion may be determined by the user. As shown in Figs. 6A, 6B, the user may select and set one of the preset multiple reference values. Desired time options may be stored into the memory unit 13 as data of multiple choices as shown in Fig. 6B by using a GUI screen shown in Fig. 6A. The user may select and set a desired time from the data by the input unit 6. Or, as an option, the user may directly input the numerical value of a predetermined time.

According to the first embodiment, the user manually operates a button on the input unit and the (preselected) video recording duration for a broadcast program on the air when a video recording instruction is made is compared with the video recording schedule determination duration a as a criterion for subsequent determination. It is determined that a broadcast program corresponding to the preselected video recording duration that does not satisfy the criterion is not a target broadcast program and video recording is continued until the next program to be broadcast ends. By setting as predetermined criteria a specific time with general or daily leeway of the user wishing to video record a program, it is possible to reliably video record a desired broadcast program even in case the user has manually instructed the start of video recording before the start of broadcasting of an intended broadcast program.

By providing plural criteria as choices, the same working effect is provided concerning video recording of various broadcast programs starting/ending at different times.

### (Embodiment 2)

The second embodiment will be explained referring to Figs. 1 and 3B.

The configuration of the second embodiment is similar to that shown in the block diagram of Fig. 1, except that setting of criteria on the end criteria setting unit 14 and the video recording end time determination unit 31.

As shown in the time chart of Fig,. 3A, the user manually instructs the start of video recording on the input unit before the start of Program B in order to perform video recording of the entire program B on the video recording apparatus 1. For example, as shown in Fig. 3A, the user instructs the "start of video recording" to the video recording apparatus 1 in the midst of Program A on the air before the target program at the time 8:55 (step S31).

In response to the start instruction, same as the first embodiment, the signal separation unit 11 of the video recording apparatus 1 receiving the broadcast program A on the tuner unit 2 separates the video/audio signal from the receive signal. The video/audio signal demodulated by the video/audio signal processing unit 4 input to the video recording unit 5 via the video recording control unit 32 and video recording is started (step S32).

Same as the first embodiment, the signal separation unit 11 separates an EPG information signal from the receive signal and inputs the EPG information signal to the program information acquisition unit 12. The EPG information signal includes program information such as a program start time and a program length (required broadcast duration). The program information acquisition unit 12 extracts the data of a. predetermined item and the program information memory unit 13 stores the data. The program start time S and program length D are referenced to calculate a program end time F (F=S+D), which is also stored. From the separated time signal, the current time is detected by the current time acquisition unit 21 and set to the clock unit 23, which outputs the current time T.

When video recording is started in step S32, With the operation of the video recording control unit 32, the GUI generation/input unit 15 inputs a predetermined default ratio k (=residual time/program length) to the end criteria setting unit 14 in this embodiment.

The video recording end time determination unit 31 to which the end criteria setting unit 14 and the clock unit 23 are connected acquires, in step S33, a program length: D, a program end time: F, a current time: T and a predetermined ratio: k of a broadcast program on the air at that point in time, that is, Program A shown in Fig. 3A. Then the video recording end time determination unit 31 uses, in step S34, a determination expression: Dxk>F-T to calculate the video recording reference duration (Dxk) from the program length D and the predetermined ratio k, and compares the video recording reference duration (Dxk) with the (preselected) video recording duration (F-T) for subsequent determination. In case the result of determination in step S34 is "True (Y)", that is, the ratio of the duration of the program to be video recorded is smaller than a predetermined value (short substantial video recording duration), it is determined that the desired program is the next program to be broadcast, and the video recording end time is set to the end time of the next program B (step S35). In case the result of determination in step S34 is "False (N)", that is, the ratio of the duration of the program to be video recorded is greater than the predetermined value and long substantial video recording is made, the broadcast program on the air at the point in time is determined as a desired video recording target and the end time F of the program (program A) is set as a video recording end time (step S36).

The video recording end time determination unit 31 compares the video recording end time it has set in step S35 or S36 with the current time T as an output of the clock unit 23 and inputs to the video recording control unit 32 a signal to instruct continuation of video recording until the current time T exceeds the video recording end time. When the video recording end time is reached, the video recording end time determination unit 31 outputs a signal to instruct termination of video recording to the video recording control unit 32.

While a continuation-instructing signal is being input, the video recording control unit 32 outputs a video/audio signal to the video recording unit 5 (step S38). When a termination-instructing signal is input, the video recording control unit 32 makes control to stop outputting a video/audio signal (step S39) and terminate the video recording.

Same as the first embodiment, the user may set the "predetermined ratio k" as a criterion as shown in Figs. 6A, 6B. As an option to the ratio k set by the user on the GUI screen shown in Fig. 6A, multiple choices may be preset as shown in Fig. 6B and multiple reference values as criterion may be set to the multiple choices, among which values the user may select one. Or, as an option, the user may directly input the numerical value of the specified ratio on the input unit for setting and storage into the memory means.

As described above, the video recording apparatus according to this embodiment determines whether the broadcast program on the air at the point in time the user has instructed the start of video recording is a desired broadcast program to be video recorded based on the ratio k of the duration of video recording (residual broadcast duration) to the broadcast duration. Thus, even in case the preceding program is a long broadcast program such as a drama or a documentary, or in case it is a short broadcast program such as news or weather forecast, it is possible to determine the preselected video recording duration in a stable fashion irrespective of the program length (broadcast duration). Even when broadcast durations are diverse because program genres are different, determination is stably made and instruction of video recording without omission is available. Even in case the broadcast program on the air is for example an extended live baseball broadcast program, determination is made based on the ratio. This advantageously makes it possible to determine that the next broadcast program is the target of video recording.

### (Embodiment 3)

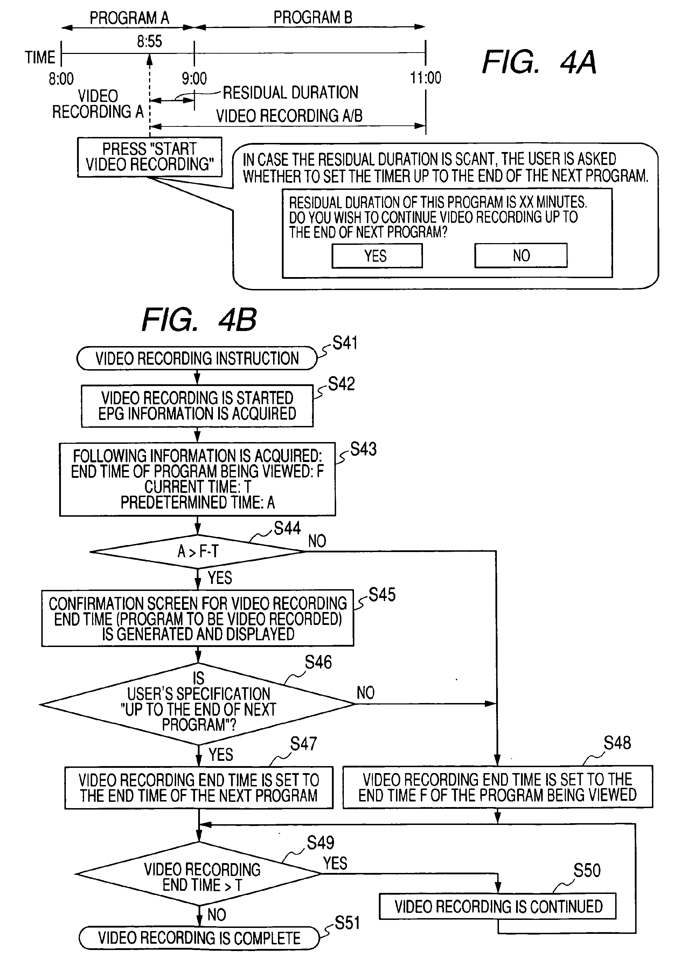

The third embodiment will be described referring to Figs. 4A, 4B.

The configuration of the third embodiment is similar to- that of the first or second embodiment as shown in the block configuration of Fig. 1. In this embodiment, the end criteria setting unit 14 and the video recording end time determination unit 31 operate as shown in the flowchart of Fig. 4B.

Processing by the end criteria setting unit 14 and the video recording end time determination unit 31 made in the third embodiment starts with a video recording instruction (step S41). Next, as shown in the time chart of Fig. 4A, Broadcast Program A is received and a video/audio signal, an EPG information signal and a time signal are separated and video recording is started (step S42).

The program end time F (F=S+D) calculated from the program start time S and the program length D in the EPG information signal is acquired, and the predetermined specific determination duration A defaulted by the GUI generation/input unit 15 is input to the end criteria setting unit 14 and the current time T obtained from the time signal by the clock unit 23 is acquired (step S43).

The video recording end time determination unit 31 determines whether a determination expression: A>F-T (preselected video recording duration) is True where F is the calculated program end time, T is the current time and A is a predetermined determination duration concerning Program A on the air at the point in time (step S44). In case the result of determination in step S44 is "True (Y)", that is, the duration of the program to be video recorded (F-T) is shorter than a predetermined determination duration A (preselected video recording duration shorter than the predetermined determination time), a GUI-based confirmation screen asking the user whether to video record up to next program as shown in the lower part of Fig. 4A is displayed (step S45) to obtain the user's confirmation (step S46).

In case the user selects "Up to next program (Yes)" in the confirmation (step S46), it is determined that the next program is the video recording target and the video recording end time is set to the end time of Program B as the next program (step S47).

In case the user selects "No" in step S46 or in case the result of determination in step S44 is "False (N)", that is, video recording is made (scheduled) for a preselected video recording duration longer than a predetermined determination time A, the broadcast program on the air at the point in time is determined as a desired video recording target (Program A) and the end time F of the program is set as a video recording end time (step S48).

Then, the video recording end time determination unit 31 determines the elapsed time until the current time T of the output from the clock unit 23 reaches the video recording end time set in step S47 or step S48 (step S49). When the result of determination is input, the video recording control unit 32 makes control on the video recording unit 5 to continue video recording (step S50) and terminate video recording when the video recording end time is reached (step S51).

According to this embodiment, even in case the specific hour/minute set value of the criteria for setting the end of video recording is only approximate irrespective of the contents of various programs, the user is asked whether to video record the next program, so that it is possible to reliably perform video recording of a desired broadcast program by reflecting the user's intention. Moreover, this video recording instruction method can set video recording more simply and more reliably than the common timer-based video recording reservation that requires input of multiple instruction information items.

### (Embodiment 4)

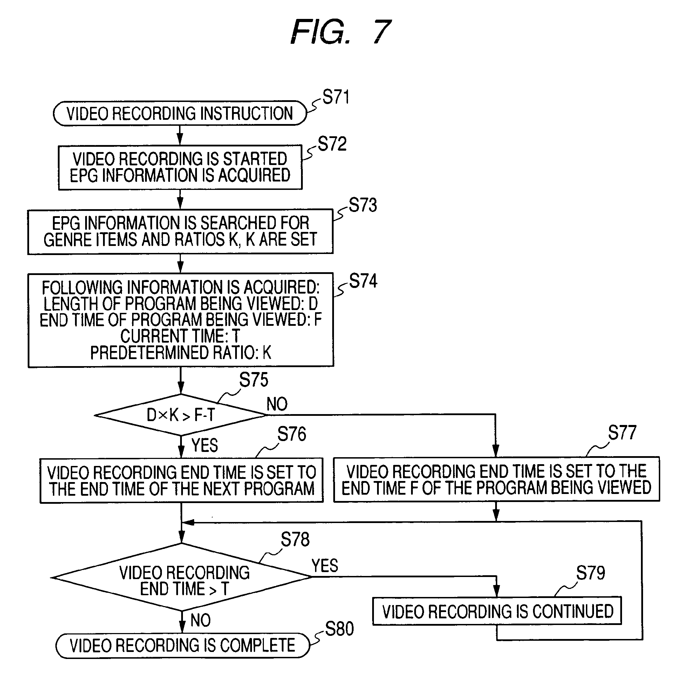

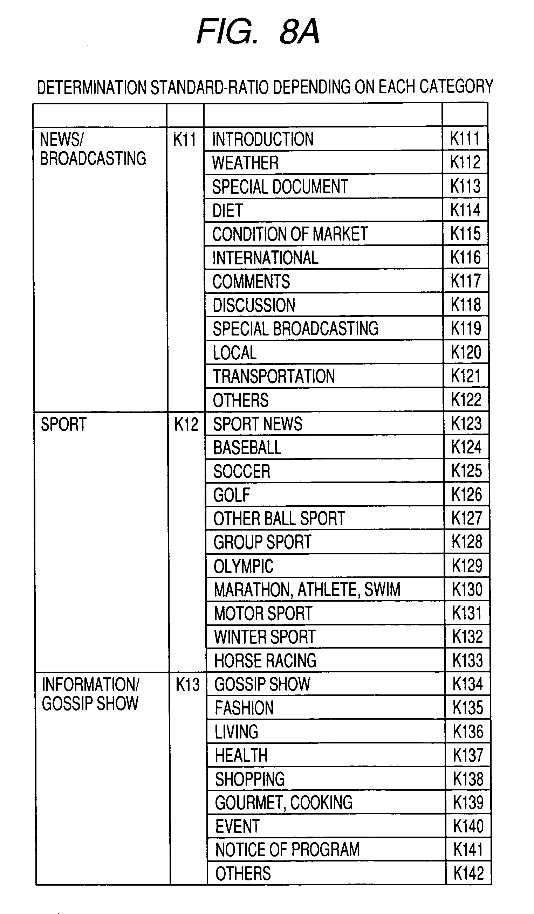

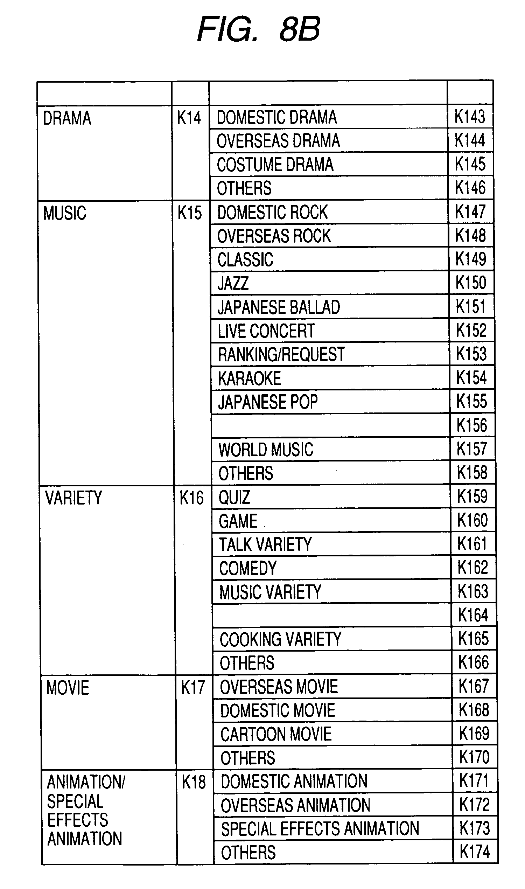

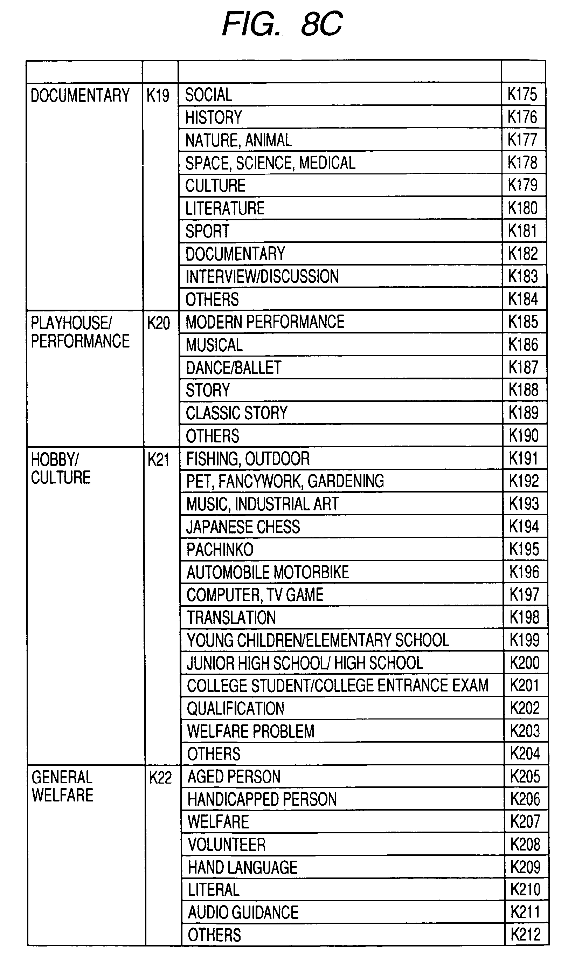

Operation of the fourth embodiment will be detailed referring to Figs. 7 and 8 that changes the criteria for the end of video recording depending on the type of a broadcast program to validate the end time of video recording.

A program information memory unit 13 of this embodiment stores a genre-based criteria ratio list shown in Fig. 8 that presets predetermined determination ratios per genre of sub-genre included in the EPG information, for example ratios K11 to K22 and k111 to K212.

The configuration of the fourth embodiment is similar to that of the first or second embodiment as shown in the block configuration of Fig. 1. In this embodiment, the end criteria setting unit 14 and the video recording end time determination unit 31 operate as shown in the flowchart of Fig. 7.

Processing by the end criteria setting unit 14 and the video recording end time determination unit 31 made in the third embodiment starts with a video recording instruction (step S71). Next, as shown in the time chart of Fig. 7, Broadcast Program A is received and a video/audio signal, an EPG information signal and a time signal are separated and video recording is started (step S72).

At the point in time video recording is started, the end criteria setting unit 14 extracts data concerning the genre of the broadcast program from the EPG information, references the genre-based criteria ratio list in the program information memory unit 13, and reads the determination ratio Knn or knnn set to the genre or sub-genre) step S73).

The end criteria setting unit 14 references the program start time S and program length D in the EPG information, and calculates and obtains the program end time F (F=S+D). The end criteria setting unit 14 acquires the current time T from the clock unit 23. The end criteria setting unit 14 acquires for example a predetermined determination ratio Knn or knnn set to the genre or sub-genre read in step S73 (step S74).

The video recording end time determination unit. 31 to which the end criteria setting unit 14 and the clock unit 23 are connected determines, in step S75, whether a determination expression: DxK (or k) >F-T is True where D is the program length, F is the program end time, T is the current time, by using a predetermined determination ratio Knn or knnn read from the genre-based criteria ratio list concerning a broadcast program on the air at the point in time, that is, for example Program A shown in Fig. 2A.

In case the result of determination in step S75 is "True (Y)", that is, the ratio of the duration of the program to be video recorded is smaller than a predetermined value (short substantial video recording duration), it is determined that the desired program is the next program to be broadcast, and the video recording end time is set to the end time of the next program B (step S76). In case the result of determination in step S75 is "False (N)", that is, the ratio of the duration of the program to be video recorded is greater than the predetermined value and long substantial video recording is made, the broadcast program on the air at the point in time is determined as a desired video recording target and the end time F of the program (program A) is set as a video recording end time (step S77).

The video recording end time determination unit 31 compares the video recording end time it has set in step S76 or S77 with the current time T as an output of the clock unit 23 (step S78) and inputs to the video recording control unit 32 a signal to instruct continuation of video recording until the current time T exceeds the video recording end time. When the current time T has exceeded the video recording end time, the video recording end time determination unit 31 outputs a signal to instruct termination of video recording to the video recording control unit 32.

While a continuation-instructing signal is being input, the video recording control unit 32 makes control on the video recording unit 5 to continue video recording (step S79). When the video recording end time is reached, the video recording control unit 32 makes control on the video recording unit 5 to terminate the video recording (step S80).

According to this embodiment, criteria corresponding to the content of the broadcast program being viewed are set. This enhances the accuracy to determine that a desired broadcast program to be video recorded is the next program rather than the broadcast program being viewed, thereby performing video recording of a target broadcast program in a more stable fashion.

According to the above-embodiment, the reference video recording duration is a time obtained by multiplying the broadcast duration of the broadcast program for which the start of the video recording is instructed by a predetermined ratio. According to the above-embodiments, the preset reference video recording duration has been respectively preset in correspondence with a genre or sub-genre of EPG program information.

According to the above-embodiments, the reference video recording duration preset in correspondence with a genre or sub-genre of the EPG program information is stored in a rewritable memory unit and that the storage content can be overwritten by a user on the input unit.

According to the above-embodiments, it is possible to perform video recording up to the end time of the next broadcast program through discrimination that is based on predetermined criteria by utilizing an EPG information signal even in case the start of video recording has been instructed before the start of a desired broadcast program to be video recorded, thereby video recording the desired broadcast program.

## Claims

1. Video recording apparatus comprising:
a tuner unit receiving a program broadcast;
a signal separation unit separating, respectively, video, an audio signal, an EPG program information signal and a time signal from the program broadcast signal of a channel received by the tuner unit;
a video recording unit recording a video/audio signal separated by the signal separation unit;
an input unit with which a user manually instructs a start of recording on the video recording unit;
a program end time detection unit detecting from the EPG program information signal an end time of the broadcast program for which the start of recording is instructed with the input unit;
a preselected video recording duration calculation unit calculating a preselected video recording duration from a recording start time at which the start of the recording is instructed to the end time of the broadcast program;
a video recording end time setting unit, by comparing the preselected video recording duration with a preset reference video recording duration, assuming a video recording end time as an end time of a broadcast program next to the broadcast program for which the start of video recording is instructed in case that the preselected video recording duration is shorter than the preset reference video recording duration and assuming the video recording end time as the end time of the broadcast program for which the start of video recording is instructed in case that the preselected video recording duration is longer than the preset reference video recording duration; and
a video recording control unit controlling to stop the video recording unit at the time set by the video recording end time setting unit.

2. The video recording apparatus according to claim 1, wherein the reference video recording duration is a time obtained by multiplying, by a predetermined ratio, a broadcast duration of the broadcast program for which the start of recording is instructed.

3. Video recording apparatus comprising:
a tuner unit receiving a program broadcast;
a signal separation unit separating, respectively, video, an audio signal, an EPG program information signal and a time signal from the program broadcast signal of a channel received by the tuner unit;
a video recording unit recording a video/audio signal separated by the signal separation unit;
an input unit with which a user manually instructs a start of recording on the video recording unit;
a program end time detection unit detecting from the EPG program information signal an end time of the broadcast program for which the start of recording is instructed with the input unit;
a preselected video recording duration calculation unit calculating a preselected video recording duration from a recording start time at which the start of the recording is instructed to the end time of the broadcast program;
a video recording end time selection unit, by comparing the preselected video recording duration with a preset reference video recording duration, making the user select whether to assume the video recording end time as the end time of the broadcast program for which the start of video recording is instructed in case that the preselected video recording duration is shorter than the preset reference video recording duration, or assuming the video recording end time as an end time of a broadcast program next to the broadcast program for which the start of video recording is instructed; and
a video recording control unit controlling to stop the video recording unit at the time set by the video recording end time setting unit.

4. The video recording apparatus according to claim 1, wherein the preset reference video recording duration is respectively preset in correspondence with a genre or sub-genre of EPG program information.

5. The video recording apparatus according to claim 3, wherein the preset reference video recording duration is respectively preset in correspondence with a genre or sub-genre of EPG program information.

6. The video recording apparatus according to claim 4, wherein the reference video recording duration preset in correspondence with a genre or sub-genre of the EPG program information is stored in a rewritable memory unit, and
wherein a storage content of the rewritable memory unit can be overwritten by a user on the input unit.

7. The video recording apparatus according to claim 5, wherein the reference video recording duration preset in correspondence with a genre or sub-genre of the EPG program information is stored in a rewritable memory unit, and
wherein a storage content of the rewritable memory unit can be overwritten by a user on the input unit.

8. A video recording method comprising:
receiving a signal of program broadcast;
separating video, an audio signal, an EPG program information signal and a time signal from the signal of program broadcast;
manually instructing, by a user, a start of recording of the program broadcast;
detecting from the EPG program information signal an end time of the broadcast program for which the start of recording is instructed;
calculating a preselected video recording duration from a recording start time at which the start of the recording is instructed to the end time of the broadcast program;
comparing the preselected video recording duration with a preset reference video recording duration;
assuming, by a result of the comparison, a video recording end time as an end time of a broadcast program next to the broadcast program for which the start of recording is instructed in case that the preselected video recording duration is shorter than the preset reference video recording duration and assuming, by the result of the comprison, the video recording end time as the end time of the broadcast program for which the start of recording is instructed in case that the preselected video recording duration is longer than the preset reference video recording duration; and
controlling to stop a recording of the broadcast program at the recording end time.
